# EUROPÄISCHE PATENTSCHRIFT

(11) **EP 1 278 972 B1**
(45) Veröffentlichungstag und Bekanntmachung des Hinweises auf die Patenterteilung: **07.04.2004**
(21) Anmeldenummer: 01940204.9
(22) Anmeldetag: 26.04.2001
(51) Int. Cl.: F16H 19/00

(54) **VORRICHTUNG ZUR UMWANDLUNG EINER DREHBEWEGUNG IN EINE LINEARBEWEGUNG**
DEVICE FOR CONVERTING A ROTARY MOVEMENT INTO A LINEAR MOVEMENT
DISPOSITIF DE CONVERSION D'UN MOUVEMENT DE ROTATION EN UN MOUVEMENT LINEAIRE

(30) Priorität: 03.05.2000 DE 10022081
(43) Veröffentlichungstag der Anmeldung: 29.01.2003
(73) Patentinhaber: Mannesmann Plastics Machinery GmbH, 80997 München (DE)
(72) Erfinder: FISCHBACH, Gunther, 82256 Fürstenfeldbruck (DE)
(74) Vertreter: Meissner, Peter E., Dipl.-Ing.
(86) Internationale Anmeldenummer: PCT/DE2001/001610
(87) Internationale Veröffentlichungsnummer: WO 2001/084015

(56) Entgegenhaltungen:
- EP-A- 0 320 621
- EP-A- 0 427 438
- WO-A-98/21438
- WO-A-99/16333
- DE-A- 2 517 247
- US-A- 5 836 205

## Beschreibung

### Beschreibung

Die Erfindung betrifft eine Vorrichtung zur Umwandlung einer Drehbewegung in eine Linearbewegung einer eine mit Betriebsbauteilen in Verbindung stehende Zahnstange aufweisenden Maschine, insbesondere einer Urform- oder Umformmaschine.

Aus EP 0 320 621 B1 ist eine Vorrichtung zur Umwandlung einer Drehbewegung in eine Axialbewegung gemäss dem Oberbegriff des Anspruchs 1 bekannt mit einer Gewindespindel, einer diese umgebenen Mutter und einer Anzahl dazwischen angeordneter Wälz- oder Rollkörper m.it unterschiedlichen Profilierungen, wobei das Gewinde der Spindel ein ein- oder mehrgängiges Feingewinde ist und die Mutter eine verhältnismäßig grobe Profilierungen aufweist.

Nachteil dieser Vorrichtung ist die ungewöhnlich komplizierte Bauweise, wobei der hier vorliegende Spindel-Mutter-Antrieb in dem stets angestrebten Kompromiss zwischen Lebensdauer, Wirkungsgrad, Geschwindigkeit und übertragbarer Kraft den Schwerpunkt auf das Letztgenannte gelegt hat.

Aus EP 0 427 438 B1 ist eine Spritzgießmaschine bekannt, welche zum Verschieben und/oder Schließen der Formplatten eine Zahnstange einsetzt.

Die Zahnstange, die im wesentlichen einen kreisförmigen Querschnitt hat, wird von einem Servomotor angetrieben, der über ein Zahnradsatz mit der Zahnstange in Verbindung steht. Die Getrieberäder sind in einem Gehäuse untergebracht und kämmen mit dem verzahnten Teil der Stange während der übrige Teil in gleitfähigen Lagern geführt wird.

Diese Bauweise erfordert ein großes Bauvolumen und eine besonders lange Zahnstange. Die herausragende Antriebsachse der Schließeinheit bedingt bei Spritzgießmaschinen eine mindestens um 10 bis 15 % längere Aufstellfläche.

Es ist Aufgabe der Erfindung, eine Vorrichtung zur Umwandlung einer Drehbewegung in eine Linearbewegung einer mit Betriebsbauteilen in Verbindung stehenden eine Zahnstange aufweisenden Maschine, insbesondere eine Urform- oder Umformmaschinen zu schaffen, die mit konstruktiv einfachen Mitteln in kompakter Bauweise geräuscharm die Betätigung von mindestens linear beweglichen Betriebsbauteilen sichert.

Die Erfindung erreicht dieses Ziel durch die Merkmale des Anspruchs 1. Die übrigen Ansprüche sind vorteilhafte Weiterbildungen der Erfindung.

Erfindungsgemäß ist ein die Längsachse der Zahnstange umhüllender Hohlwellenmotor vorgesehen, dessen Rotor über ein Getriebe mit dem Antriebszahnrad der Zahnstange in Verbindung steht.

An die Zahnstange sind die verschiedensten Betriebsbauteile ankoppelbar, im wesentlichen Bearbeitungswerkzeuge einer Werkzeugmaschine, insbesondere einer Maschinen zum Räumen, Fräsen, Hohnen, Drücken oder Pressen, sowie Formschließund/oder Zuhalteeinrichtung einer Kunststoffmaschine, insbesondere einer Spritzgießmaschine, Blasformmaschine oder Presse, oder auch Positionierungs- bzw. Andrückeinrichtungen der Plastifizier- und/oder Spritzeinheit einer Kunststoffmaschine, Schnecken oder Kolben einer Spritzeinheit für Kunststoffe, Keramik; Metalle oder andere Materialien oder auch eine Walze, hier insbesondere Druckwalze oder formende Walze.

Soweit neben der Linearbewegung noch eine rotatorische Bewegung des Betriebsbauteils erforderlich ist, kommt ein zweiter Hohlwellenmotor zum Einsatz. Dieser kann in einem Gehäuse mit dem ersten Hohlwellenmotor untergebracht sein, es kann aber auch eine Bauweise gewählt werden, bei dem die Hohlwellenmotoren zu beiden Seiten des Getriebes angeordnet sind.
Als Form der Zahnstange wird sowohl ein viereckiger wie ein runder Querschnitt verwendet. Soweit die Zahnstange einen viereckigen Querschnitt aufweist, ist beim Einsatz eines ebenfalls noch rotatorisch zu bewegenden Betriebsbauteils zwischen diesem und der Zahnstange ein Freilauf vorgesehen.

In einer vorteilhaften Ausgestaltung ist der Rotor des Hohlwellenmotors mit einer Lochscheibe verbunden, die mit einem Zahnkranz in Verbindung steht, der mit mindestens einem Abtriebszahnrad kämmt. Die Achse dieses Abtriebszahnrades ist in einer Ebene im wesentlichen parallel zur Lochscheibe angeordnet und steht mit dem Antriebszahnrad der Zahnstange in Verbindung. In einer Ausführungsform kämmt das Abtriebszahnrad mit einem Übertragungszahnrad, welches über eine erste Welle mit den Antriebszahnrad verbunden ist. In einer weiteren Ausführungsform ist ein Doppelzahnrad vorgesehen, das einenends mit dem Abtriebszahnrad und anderenends mit der Zahnstange kämmt. In einer anderen Ausgestaltungsform ist das Abtriebszahnrad Ober eine zweite Welle mit einem Übergangszahnrad verbunden, welches mit einem Zwischenrad kämmt, das mit dem Antriebszahnrad zum Antreiben der Zahnstange verbunden ist.

In einer vorteilhaften Ausgestaltungsform sind das Gehäuse für das Getriebe wie auch das Gehäuse für den Hohlwellenmotor in der Weise aufgebaut, dass ausschließlich einen runden Querschnitt aufweisende Durchtritte im Gehäuse vorgesehen sind, die durch Dichtungen sicher verschließbar sind. Hierzu ist ein Rohrkörper vorgesehen, der die Zahnstange umhüllt und mit dem Gehäuse des Motors wie auch des Getriebes über Dichtungen verbunden und dabei drehbar frei bewegbar ist. Die Zahnstange korrespondiert hierbei mit dem Antriebszahnrad, dessen Welle durch eine Dichtung abgedichtet in das Getriebegehäuse geführt wird. Auf diese Weise ist eine leckagefreie Schmierung des Getriebes sichergestellt.

Der Einsatz von kompaktem Gehäuse und die sichere Umhüllung sowohl des Motors bzw. der Motoren und des Getriebes führen zu einer Geräuschminderung des Antriebes.

Ein Beispiel der Erfindung ist in der vorliegenden Zeichnung dargelegt. Dabei zeigen die
- Figur 1: Zahnstangenantrieb mit einem Hohlwellenmotor
- Figur 2: Zahnstangenantrieb mit zwei auf einer Seite angeordneten Hohlwellenmotoren
- Figur 3: Zahnstangenantrieb mit zu beiden Seiten des Getriebes angeordneten Hohlwellenmotoren
- Figur 4: Kegelradantrieb mit Übertragungszahnrad
- Figur 5: Kegelradantrieb mit Zwischenzahnrad
- Figur 6: Antriebszahnrad für runde Zahnstange
- Figur 7: Gehäuse für Hohlwellenmotor und Getriebe

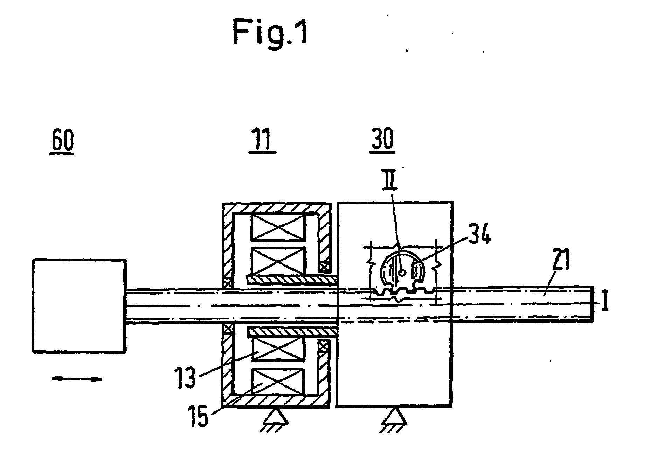

Die Figuren 1-3 zeigen ein Betriebsbauteil 60, das durch eine linear bewegbare Zahnstange 21 betätigt wird. Die Zahnstange 21 wird von einem Antriebsrad 34 eines Getriebes 30 angetrieben. Das Getriebe 30 steht dabei mit einem Rotor 13 eines einen Stator 15 aufweisenden Hohlwellenmotorss 11 in Verbindung.

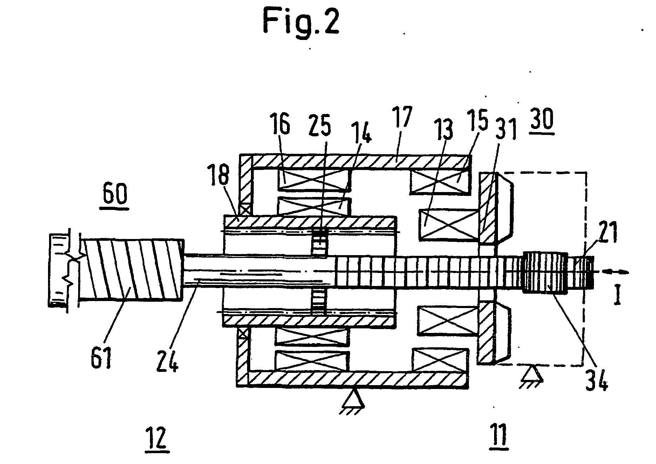

In der Figur 2 ist als Betriebsbauteil 60 eine Schnecke 61 dargestellt, die über eine Stange 24 mit der Zahnstange 21 verbunden ist. Die Zahnstange 21 hat einen kreisförmigen Querschnitt und wird von einem hierzu angepassten Antriebszahnrad 34 des Getriebes 30 angetrieben. Das Antriebszahnrad 34 steht mit einer Lochscheibe 31 in Verbindung, die von dem Rotor 13 des ersten Hohlwellenmotors 11 angetrieben wird.

In einem gemeinsamen Gehäuse 17 ist neben dem ersten Hohlwellenmotor 11 ein zweiter Hohlwellenmotor 12 vorgesehen, der einen Stator 16 aufweist, welcher einen Rotor 14 antreibt, der mit einem Rohrkörper 18 verbunden ist. Der Rohrkörper 18 weist eine Innenverzahnung auf, die mit einer Zahnscheibe 25 korrespondiert, welche an der Stange 24 befestigt ist. Bei gleichzeitiger linearer Bewegung der Zahnstange 21 und der Stange 24 ist die Schnecke 61 durch die Rotation des Rohrkörpers 18 drehbar.

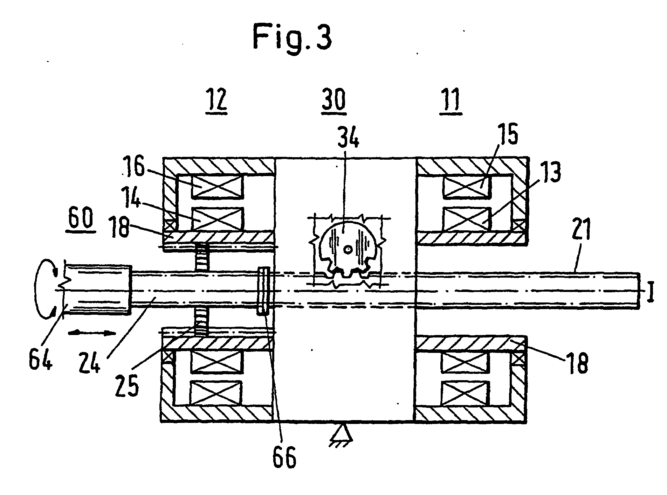

In der Figur 3 sind die Hohlwellenmotoren 11 und 12 mit den Statoren 15 und 16 und den Rotoren 13 und 14 zu beiden Seiten des Getriebes 30 angeordnet.

Als Betriebsbauteil ist hier ein Ausdreher 64 vorgesehen, der mit der Stange 24 verbunden ist, welcher die Zahnscheibe 25 trägt. Die Stange 24 ist über die Zahnscheibe 25 durch die Innenverzahnung, die mit der Verzahnung der Zahnscheibe 25 korrespondiert, in beliebiger Richtung drehbar. Zwischen der Stange 24 und der Zahnstange 21 ist ein Freilauf 66 vorgesehen, der die Rotationsbewegung der Stange 24 bei gleichzeitiger linearer Bewegung der einen beliebigen Querschnitt aufweisenden Zahnstange 21 zuläßt.

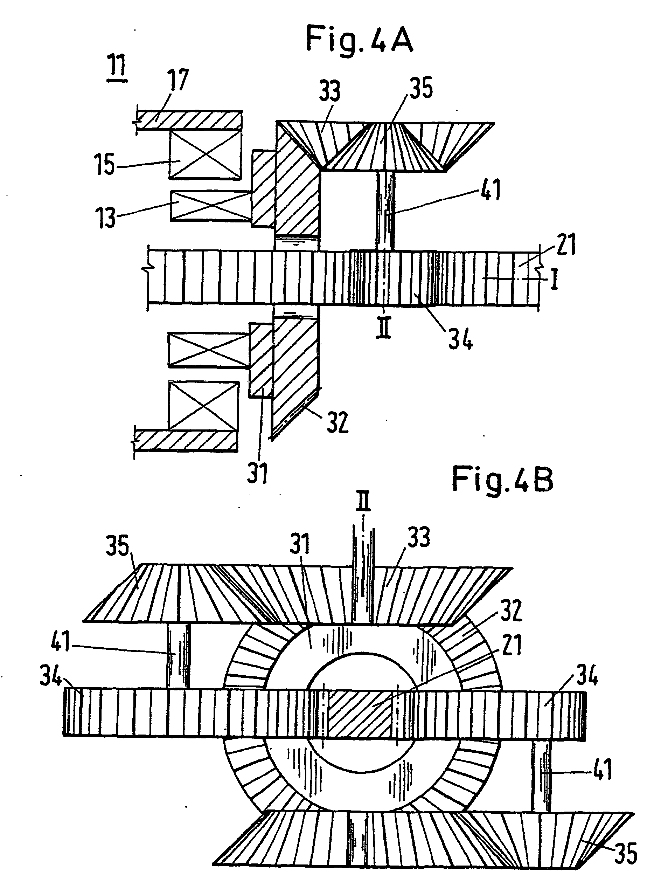

Die Figuren 4 bis 7 zeigen jeweils einen Schnitt und eine Draufsicht der Getriebeform.

In der Figur 4 wird eine Lochscheibe 31 von dem Rotor 13 des einen Stator 15 aufweisenden ersten Hohlwellenmotors angetrieben. An der Lochscheibe 31 ist ein Kegelrad 32 angeordnet, welches mit einem Abtriebszahnrad 33 kämmt. Das Abtriebszahnrad 33 korrespondiert mit einem Übertragungszahnrad 35, welches über eine erste Welle 41 mit einem Antriebszahnrad 34 verbunden ist Das Antriebszahnrad 34 treibt die Zahnstange 21.

Im unteren Teil des Bildes b) ist symmetrisch der gleiche Antriebszweig vorgesehen.

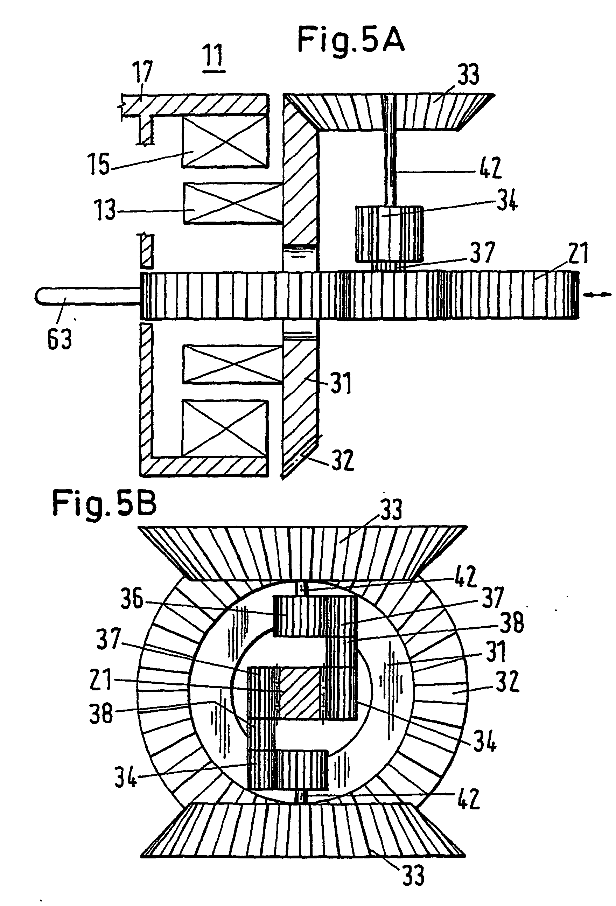

In der Figur 5 ist der Rotor 13 des ersten Hohlwellenmotors 11 mit einer Lochscheibe 31 verbunden, die einen Zahnrad 32 aufweist. Der Zahnkranz 32 korrespondiert mit einem Abtriebszahnrad 33, welches über eine zweite Welle 42 mit einem Übergangszahnrad 36 verbunden ist. Mit dem Übergangszahnrad 36 kämmt ein Zwischenzahnrad 37, welches im vorliegenden Fall als Doppelzahnrad 38 ausgestaltet ist und als Antriebszahnrad 34 mit der Zahnstange 21 kämmt. Die Zahnstange 21 weist einen rechteckigen Querschnitt auf und ist anderenends mit einem Ausstoßer 63 verbunden.

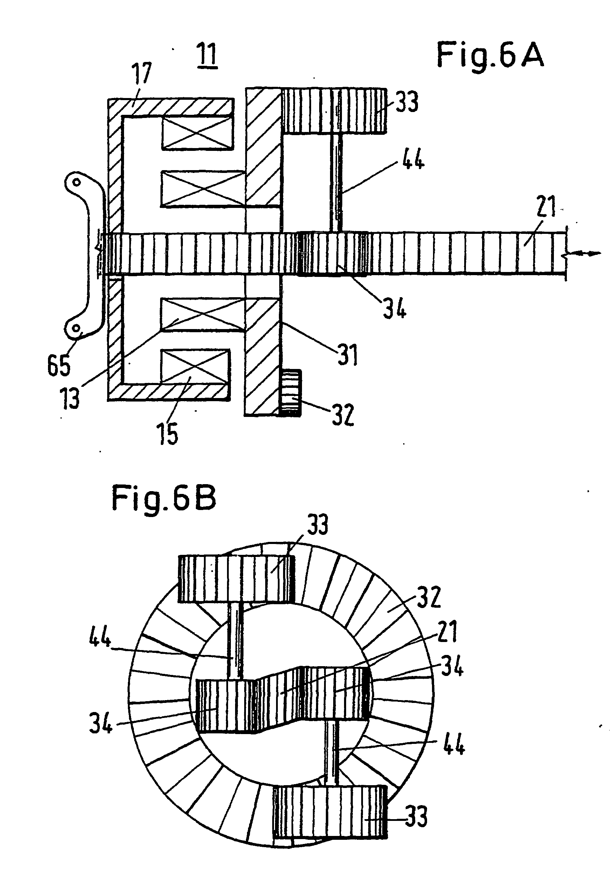

In der Figur 6 ist der Zahnkranz 32, der mit dem Rotor 13 des Hohlwellenmotors 11 verbundenen Lochscheibe 31 mit einem Antriebszahnrad 33 verbunden. Das Zahnrad 33 steht über eine vierte Welle 44 mit einem Antriebszahnrad 34 in Verbindung, welches mit einer einen runden Querschnitt aufweisenden Zahnstange 21 korrespondiert. Kopfendig ist an der Zahnstange 21 als Betriebsbauteil ein Kreuzkopf 65 für einen Kniehebel befestigt.

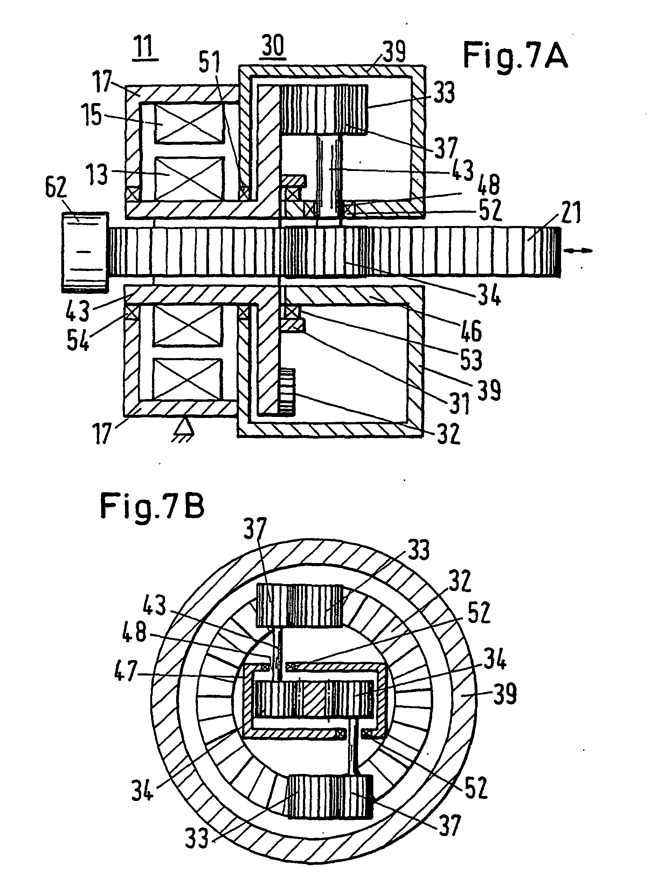

In der Figur 7 sind der Stator 15 und der Rotor 13 des ersten Hohlwellenmotors 11 von einem Gehäuse 17 umgeben. Der Rotor 13 ist mit einer Hohlwelle 45 verbunden und über die Gehäusedichtung 51 sowie die Rohrdichtung 54 leckagefrei vom Hohlwellenmotor 11 getrennt.

Die Hohlwelle 45 ist mit einer Lochscheibe 31 verbunden, welche einen Zahnkranz 32 aufweist, der mit einem Abtriebszahnrad 33 kämmt. Das Abtriebszahnrad 33 ist über eine dritte Welle 43 mit dem Antriebszahnrad 34 verbunden.

Das Getriebe 30 ist von einem Getriebegehäuse 39 umhüllt, welches einen Rohrkörper 46 aufweist, der die Zahnstange 21 umhüllt. Der Rohrkörper 46 ist kopfendig über eine Muffendichtung 53 zur Lochscheibe 31 hin leckagefrei abgedichtet. Der Rohrkörper 46 weist im Bereich des Antriebszahnrades 34 eine Ausbuchtung 47 auf. Weiterhin besitzt der Rohrkörper 46 einen Durchtritt 48, der Ober eine Wellendichtung 52 mit der ein Zwischenrad 37 und das Antriebszahnrad 34 verbindenden dritten Welle 43 bei einem ölgeschmierten Getriebe eine leckagefreie Drehung gewährleistet.

Die von dem Antriebszahnrad 34 angetriebene Zahnstange 21 weist kopfendig als Betriebsbauteil einen Kolben 62 auf.

### Positionsliste

### Antreiben

- 11: Erster Hohlwellenmotor
- 12: Zweiter Hohlwellenmotor
- 13: Rotor (11)
- 14: (Rotor 12)
- 15: Stator (11)
- 16: Stator (12)
- 17: Gehäuse
- 18: Rohrkörper

### Linearbewegen

- 21: Zahnstange
- 22: Ebene Verzahnung
- 23: Rundverzahnung
- 24: Stange
- 25: Zahnscheibe

- **30**: **Getriebe**
- 31: Lochscheibe
- 32: Zahnkranz
- 33: Abtriebszahnrad
- 34: Antriebszahnrad
- 35: Übertragungszahnrad
- 36: Übergangszahnrad
- 37: Zwischenzahnrad
- 38: Doppelzahnrad
- 39: Getriebegehäuse

### Wellen

- 41: Erste Welle (34, 35)
- 42: Zweite Welle (33, 36)
- 43: Dritte Welle (34, 37)
- 44: Vierte Welle
- 45: Hohlwelle
- 46: Rohrkörper
- 47: Ausbuchtung
- 48: Durchtritt

### Dichten

- 51: Gehäusedichtung
- 52: Wellendichtung
- 53: Muffendichtung
- 54: Rohrdichtung

- **60**: **Betriebsbauteile**
- 61: Schnecke
- 62: Kolben
- 63: Ausstoßer
- 64: Ausdreher
- 65: Kreuzkopf-Kniehebel
- 66: Freilauf
- 67: Walze
- 68: Bearbeitungswerkzeug
- 69: Formschließeinrichtung
- I: Achse Zahnstange
- II: Achse Abtriebsrad

## Patentansprüche

1. Vorrichtung zur Umwandlung einer Drehbewegung in eine Linearbewegung einer eine mit Betriebsbauteilen in Verbindung stehende Zahnstange aufweisenden Maschine, insbesondere einer Urform- oder Umformmaschine.
**dadurch gekennzeichnet,**
**dass** ein die Längsachse der Zahnstange in dem den Betriebsbauteilen (60) abgewandten Bereich umhüllender erster Hohlwellenmotor (11) vorgesehen ist, dessen Rotor (13) mit einem Getriebe in Verbindung steht, dessen Eingangsachse mit der Achse (I) des Hohlwellenmotors (11) identisch ist, und das mindestens eine Abtriebsachse (II) aufweist, die mit mindestens einem Antriebszahnrad (34) verbunden ist, das mit der Zahnstange (21) kämmt.

2. Vorrichtung nach Anspruch 1,
**dadurch gekennzeichnet,**
**dass** das Betriebsbauteil (60) ein Bearbeitungswerkzeug (68) einer Maschine zum Räumen, Fräsen, Honen, Drücken oder Pressen ist.

3. Vorrichtung nach Anspruch 1,
**dadurch gekennzeichnet,**
**dass** das Betriebsbauteil (60) die Formschließ- und/oder Zuhalteeinheit einer Kunststoffmaschine, insbesondere einer Spritzgießmaschine, Blasformmaschine oder Presse ist.

4. Vorrichtung nach Anspruch 1,
**dadurch gekennzeichnet,**
**dass** das Betriebsbauteil die Positionierung oder Andrückung der Plastifizierund/oder Spritzeinheit eienr Kunststoffmaschine, insbesondere einer Spritzgießmaschine oder Blasformmaschine ist.

5. Vorrichtung nach Anspruch 1,
**dadurch gekennzeichnet,**
**dass** das Betriebsbauteil eine Schnecke (61) einer Spritzgießeinheit, insbesondere für Kunststoffe oder Metalle ist.

6. Vorrichtung nach Anspruch 1,
**dadurch gekennzeichnet,**
**dass** das Betriebsbauteil eine Ausstoß- (63) und/oder Ausdreheinrichtung (64) für Kunststoffteile aus der Form einer Spritzgießmaschine ist.

7. Vorrichtung nach Anspruch 1,
**dadurch gekennzeichnet,**
**dass** das Betriebsbauteil (60) eine Walze (67), insbesondere eine Druckwalze oder formende Walze ist, die längs oder quer zur Rotationsrichtung verschoben, positioniert oder mit Kraft beaufschlagt wird.

8. Vorrichtung nach Anspruch 1,
**dadurch gekennzeichnet,**
**dass** ein die Zahnstange (21) umhüllender erster Hohlwellenmotor (11) vorgesehen ist, dessen Rotor (13) mit einer Lochscheibe (31) verbunden ist, dass die Lochscheibe (31) mit einem Zahnkranz (32) in Verbindung steht, der mit mindestens einem Abtriebszahnrad (33) kämmt, dessen Achse (II) in einer Ebene im wesentlichen parallel zur Lochscheibe (31) angeordnet ist, und dass ein mit dem Abtriebsrad (33) in Verbindung stehendes Antriebszahnrad (34) mit der Zahnstange (21) kämmt

9. Vorrichtung nach Anspruch 8,
**dadurch gekennzeichnet,**
**dass** das Abtriebszahnrad (33) mit einem Übertragungszahnrad (35) kämmt, welches über eine erste Welle (41) mit dem Antriebszahnrad (34) verbunden ist.

10. Vorrichtung nach Anspruch 8,
**dadurch gekennzeichnet,**
**dass** ein Doppelzahnrad (38) vorgesehen ist, das einenends mit dem Abtriebszahnrad (33) und anderenends mit der Zahnstange (21) kämmt.

11. Vorrichtung nach Anspruch 8,
**dadurch gekennzeichnet,**
**dass** das Abtriebszahnrad (33) über eine zweite Welle (42) mit einem Übergangszahnrad (36) verbunden ist, welches mit einem Zwischenrad (37) kämmt, das insbesondere über eine dritte Welle (43) mit dem Antriebszahnrad (34) verbunden ist.

12. Vorrichtung nach den Ansprüchen 10 oder 11,,
**dadurch gekennzeichnet,**
**dass** das Abtriebszahnrad (33) und der Zahnkranz (32) der Lochscheibe (31) als Kegelräder ausgebildet sind und ein Hypoidpaar bilden.

13. Vorrichtung nach mindestens einem der o.g. Ansprüche,
**dadurch gekennzeichnet,**
**dass** die Zahnstange (21) einen runden Querschnitt mit einer Rundverzahnung (23) aufweist und dass der Außenumfang des Antriebsrades (34) eine hierzu angepasste Verzahnungsform aufweist.

14. Vorrichtung nach Anspruch 13,
**dadurch gekennzeichnet,**
**dass** das Antriebszahnrad (34) über eine vierte Welle (44) unmittelbar mit dem Abtriebsrad (33) verbunden ist.

15. Vorrichtung nach Anspruch 8,
**dadurch gekennzeichnet,**
**dass** eine Hohlwelle (45) vorgesehen ist, die zwischen dem Rotor (13) des ersten Hohlwellenmotors (11) und der Zahnstange (21) diese umhüllend angeordnet ist, und
**dass** die Hohlwelle (45) innig mit der Lochscheibe (31) verbunden ist.

16. Vorrichtung nach einem der vorgenannten Ansprüche,
**dadurch gekennzeichnet,**
**dass** die Getriebeelemente (31-38) und Wellen (41-46) von einem Getriebegehäuse (39) umhüllt werden,
**dass** ein Rohrkörper (46) vorgesehen ist, der die Zahnstange (21) umhüllend innig mit dem Gehäuse (39) verbunden ist,
**dass** der Rohrkörper (46) im Bereich des Antriebsrades (34) eine Ausbuchtung (47) aufweist, in der ein Durchtritt (48) zur Durchführung der Welle (43) vorgesehen ist.

17. Vorrichtung nach Anspruch 16,
**dadurch gekennzeichnet,**
**dass** zwischen dem Gehäuse (39) und der Hohlwelle (45) eine Gehäusedichtung (51), zwischen der Ausbuchtung (47) und der Welle (43) eine Wellendichtung (52), und
zwischen dem Rohrkörper (46) und der Lochscheibe (41) eine Muffendichtung (53) vorgesehen ist.

18. Vorrichtung nach einem der o.g. Ansprüche,
**dadurch gekennzeichnet,**
**dass** die Zahnstange (21) mit einer Stange (24) verbunden ist, an der kopfendig das Betriebsbauteil (61-65) befestigt ist, und
**dass** an der Stange (24) eine mit einer Verzahnung versehene Scheibe (25) vorgesehen ist, welche mit der Innenverzahnung des Rohrkörpers (18) korrespondiert.

19. Vorrichtung nach Anspruch 18,
**dadurch gekennzeichnet,**
**dass** der Rohrkörper (18) mit dem Rotor (14) eines zweiten Hohlwellenmotors (12) verbunden ist.

20. Vorrichtung nach den Ansprüchen 19 oder 18,
**dadurch gekennzeichnet,**
**dass** zwischen der Stange (24) und der Zahnstange (21) ein Freilauf (66) vorgesehen ist

21. Vorrichtung nach einem der Ansprüche 18 bis 20,
**dadurch gekennzeichnet,**
**dass** die Statoren (15, 16) beider Hohlwellenmotore (11, 12) ein gemeinsames Gehäuse (17) besitzen.

## Claims

1. Device for converting a rotary movement into a linear movement of a machine, in particular a primary processing or shaping machine, comprising a rack which is connected to operating components,
**characterised in**
**that** a first hollow-shaft motor (11) is provided, which motor encompasses the longitudinal axis of the rack in the region remote from the operating components (60) and the rotor (13) of which is connected to a transmission, the input axis of which is identical with the axis (I) of the hollow-shaft motor (11), and which comprises at least one driven axis (II), which is connected to at least one driving gear wheel (34) meshing with the rack (21).

2. Device according to Claim 1,
**characterised in**
**that** the operating component (60) is a processing tool (68) of a machine for broaching, milling, honing, pressing or compression moulding.

3. Device according to Claim 1,
**characterised in**
**that** the operating component (60) is the mould closing and/or clamping unit of a plastics machine, in particular an injection moulding machine, a blow moulding machine or a press.

4. Device according to Claim 1,
**characterised in**
**that** the operating component is the positioning or pressure device of the plasticating and/or injection unit of a plastics machine, in particular an injection moulding machine or a blow moulding machine.

5. Device according to Claim 1,
**characterised in**
**that** the operating component is a screw (6) of an injection moulding unit, in particular for plastics or metals.

6. Device according to Claim 1,
**characterised in**
**that** the operating component is an ejection (63) and/or turning-out device (64) for removing plastics parts from the mould of an injection moulding machine.

7. Device according to Claim 1,
**characterised in**
**that** the operating component (60) is a roll (67), in particular a pressure roll or forming roll, which is displaced, positioned or subjected to force longitudinally or transversely to the direction of rotation.

8. Device according to Claim 1,
**characterised in**
**that** a first hollow-shaft motor (11) is provided, which motor encompasses the rack (21) and the rotor (13) of which is connected to a perforated disc (31), that the perforated disc (31) is connected to a ring gear (32), which meshes with at least one driven gear wheel (33), the axis (II) of which is disposed in a plane substantially parallel to the perforated disc (31), and
**that** a driving gear wheel (34), which is connected to the driven wheel (33), meshes with the rack (21).

9. Device according to Claim 8,
**characterised in**
**that** the driven gear wheel (33) meshes with a transmission gear wheel (35), which is connected via a first shaft (41) to the driving gear wheel (34).

10. Device according to Claim 8,
**characterised in**
**that** a double gear wheel (38) is provided, which wheel meshes at one end with the driven gear wheel (33) and at the other with the rack (21).

11. Device according to Claim 8,
**characterised in**
**that** the driven gear wheel (33) is connected via a second shaft (42) to a transition gear wheel (36), which meshes with an intermediate wheel (37), which is in particular connected via a third shaft (43) to the driving gear wheel (34).

12. Device according to Claim 10 or 11,
**characterised in**
**that** the driven gear wheel (33) and the ring gear (32) of the perforated disc (31) are constructed as bevel wheels and form a hypoid pair.

13. Device according to at least one of the above-mentioned Claims,
**characterised in**
**that** the rack (21) has a circular cross section with a circular tooth system (23), and
**that** the outer circumference of the driving wheel (34) has a tooth system form which is adapted to this.

14. Device according to Claim 13,
**characterised in**
**that** the driving gear wheel (34) is directly connected via a fourth shaft (44) to the driven wheel (33).

15. Device according to Claim 8,
**characterised in**
**that** a hollow shaft (45) is provided, which shaft is disposed between the rotor (13) of the first hollow-shaft motor (11) and the rack (21) so as to encompass the latter, and
**that** the hollow shaft (45) is intimately connected to the perforated disc (31).

16. Device according to any one of the preceding Claims,
**characterised in**
**that** the transmission elements (31-38) and shafts (41-46) are encompassed by a transmission case (39),
**that** a tubular body (46) is provided, which body is intimately connected to the case (39) so as to encompass the rack (21), and
**that** the tubular body (46) comprises in the region of the driving wheel (34) a convexity (47), in which a passage (48) for passing through the shaft (43) is provided.

17. Device according to Claim 16,
**characterised in**
**that** a case seal (51) is provided between the case (39) and the hollow shaft (45), a shaft seal (52) is provided between the convexity (47) and the shaft (43), and
a sleeve seal (53) is provided between the tubular body (46) and the perforated disc (41).

18. Device according to any one of the above-mentioned Claims,
**characterised in**
**that** the rack (21) is connected to a rod (24), to which the operating component (61-65) is fastened at the head end, and that a disc (25), provided with a tooth system, is provided at the rod (24), which disc corresponds to the internal tooth system of the tubular body (18).

19. Device according to Claim 18,
**characterised in**
**that** the tubular body (18) is connected to the rotor (14) of a second hollow-shaft motor (12).

20. Device according to Claim 19 or 18,
**characterised in**
**that** a free-wheel (66) is provided between the rod (24) and the rack (21).

21. Device according to any one of Claims 18 to 20,
**characterised in**
**that** the stators (15, 16) of the two hollow-shaft motors (11, 12) have a common case (17).

## Revendications

1. Dispositif pour transformer un mouvement rotatif en mouvement linéaire d'une machine présentant une crémaillère en relation avec des composants fonctionnels, notamment d'une machine de formage initial ou de transformation,
**caractérisé en ce qu'**il est prévu un premier moteur à arbre creux (11) enveloppant l'axe longitudinal de la crémaillère dans la zone orientée à l'opposé des composants fonctionnels (60), dont le rotor (13) est en relation avec un engrenage dont l'axe d'entrée est identique à l'axe (I) du moteur à arbre creux (11) et qui présente au moins un axe de sortie (II), lequel est relié à au moins une roue dentée motrice (34) qui s'engrène dans la crémaillère (21).

2. Dispositif selon la revendication 1,
**caractérisé en ce que** le composant fonctionnel (60) est un outil d'usinage (68) d'une machine de brochage, de fraisage, de pierrage, de pressage ou d'emboutissage.

3. Dispositif selon la revendication 1,
**caractérisé en ce que** le composant fonctionnel (60) est l'unité de fermeture de moule et/ou de verrouillage d'une presse à plastiques, notamment d'une presse à injection, d'une machine de soufflage ou presse.

4. Dispositif selon la revendication 1,
**caractérisé en ce que** le composant fonctionnel est le positionnement ou le serrage de l'unité de plastification et/ou d'injection d'une presse à plastiques, notamment d'une presse à injection ou d'une machine de soufflage.

5. Dispositif selon la revendication 1,
**caractérisé en ce que** l'élément fonctionnel est une vis sans fin (61) d'une unité d'injection, notamment pour plastiques ou métaux.

6. Dispositif selon la revendication 1,
**caractérisé en ce que** le composant fonctionnel est un dispositif d'éjection (63) et/ou de dévissage (64) de pièces plastiques hors du moule d'une presse à injection.

7. Dispositif selon la revendication 1,
**caractérisé en ce que** le composant fonctionnel (60) est un cylindre (67), notamment un cylindre de pression ou un cylindre de formage, qui est déplacé, positionné ou sollicité par une force longitudinalement ou transversalement au sens de rotation.

8. Dispositif selon la revendication 1,
**caractérisé en ce qu'**il est prévu un premier moteur à arbre creux (11) enveloppant la crémaillère (21), dont le rotor (13) est relié à un disque perforé (31), **en ce que** le disque perforé (31) est en relation avec une couronne dentée (32) qui s'engrène dans au moins une roue dentée de sortie (33), dont l'axe (II) est agencé dans un plan essentiellement parallèle au disque perforé (31), et **en ce qu'**une roue dentée motrice (34) en relation avec la roue de sortie (33) s'engrène dans la crémaillère (21).

9. Dispositif selon la revendication 8,
**caractérisé en ce que** la roue dentée de sortie (33) s'engrène dans une roue dentée de transmission (35), laquelle est reliée à la roue dentée motrice (34) par l'intermédiaire d'un premier arbre (41).

10. Dispositif selon la revendication 8,
**caractérisé en ce qu'**il est prévu une roue dentée double (38) qui s'engrène à une extrémité dans la roue dentée de sortie (33) et à l'autre extrémité dans la crémaillère (21).

11. Dispositif selon la revendication 8,
**caractérisé en ce que** la roue dentée de sortie (33) est reliée par l'intermédiaire d'un deuxième arbre (42) à une roue dentée de transition (36), laquelle s'engrène dans une roue intermédiaire (37) qui est reliée à la roue dentée motrice (34) en particulier par l'intermédiaire d'un troisième arbre (43).

12. Dispositif selon la revendication 10 ou 11,
**caractérisé en ce que** la roue dentée de sortie (33) et la couronne dentée (32) du disque perforé (31) sont réalisées sous la forme de roues coniques et forment une paire hypoïde.

13. Dispositif selon au moins l'une des revendications précédentes,
**caractérisé en ce que** la crémaillère (21) présente une section transversale circulaire avec une denture circulaire (23) et **en ce que** le périmètre extérieur de la roue motrice (34) présente une forme de denture adaptée à celle-ci.

14. Dispositif selon la revendication 13,
**caractérisé en ce que** la roue dentée motrice (34) est directement reliée à la roue de sortie (33) par un quatrième arbre (44).

15. Dispositif selon la revendication 8,
**caractérisé en ce qu'**il est prévu un arbre creux (45) qui est agencé entre le rotor (13) du premier moteur à arbre creux (11) et la crémaillère (21) en l'enveloppant, et **en ce que** l'arbre creux (45) est intimement relié au disque perforé (31).

16. Dispositif selon l'une des revendications précédentes,
**caractérisé en ce que** les éléments d'engrenage (31-38) et les arbres (41-46) sont enveloppés par un carter d'engrenage (39), **en ce qu'**il est prévu un corps tubulaire (46) qui est intimement relié au carter (39) tout en enveloppant la crémaillère (21), **en ce que** le corps tubulaire (46) présente dans la zone de la roue motrice (34) un embouti (47) dans lequel il est prévu un passage (48) pour conduire l'arbre (43).

17. Dispositif selon la revendication 16,
**caractérisé en ce qu'**il est prévu un joint de carter (51) entre le carter (39) et l'arbre creux (45), un joint d'arbre (52) entre l'embouti (47) et l'arbre (43) et un joint à manchon (53) entre le corps tubulaire (46) et le disque perforé (41).

18. Dispositif selon l'une des revendications précédentes,
**caractérisé en ce que** la crémaillère (21) est reliée à une tige (24), sur laquelle est fixé côté tête le composant fonctionnel (61-65), et **en ce qu'**il est prévu sur la tige (24) un disque (25) pourvu d'une denture, laquelle correspond à la denture intérieure du corps tubulaire (18).

19. Dispositif selon la revendication 18,
**caractérisé en ce que** le corps tubulaire (18) est relié au rotor (14) d'un second moteur à arbre creux (12).

20. Dispositif selon la revendication 19 ou 18,
**caractérisé en ce qu'**une roue libre (66) est prévue entre la tige (24) et la crémaillère (21).

21. Dispositif selon l'une des revendications 18 à 20,
**caractérisé en ce que** les stators (15, 16) des deux moteurs à arbre creux (11, 12) possèdent un carter commun (17).
